(19) Europäisches Patentamt
European Patent Office
Office européen des brevets

(11) Publication number: 0 228 602 B1

(12) # EUROPEAN PATENT SPECIFICATION

(45) Date of publication of the patent specification: 11.07.90

(51) Int. Cl.[5]: C25B 11/20, H01M 8/10

(21) Application number: 86116947.2

(22) Date of filing: 05.12.86

(54) **A method for making an improved solid polymer electrolyte electrode using a liquid or solvent.**

(30) Priority: 09.12.85 US 806319
09.12.85 US 806714

(43) Date of publication of application: 15.07.87 Bulletin 87/29

(45) Publication of the grant of the patent: 11.07.90 Bulletin 90/28

(84) Designated Contracting States: AT BE CH DE ES FR GB IT LI LU NL SE

(56) References cited:
DE-A- 3 036 066
GB-A- 2 117 797
US-A- 3 134 697

(73) Proprietor: THE DOW CHEMICAL COMPANY, 2030 Dow Center Abbott Road P.O. Box 1967, Midland Michigan 48640-1967(US)

(72) Inventor: McIntyre, John M., 319 Petunia, Lake Jackson Texas 77566(US)
Inventor: Birdwell, Jeffrey D., 207 Nasturtium, Lake Jackson Texas 77566(US)
Inventor: Carl, William P., Highway 288, Freeport Texas 77541(US)
Inventor: Smith, Bruce R., 58 Blackgum Court, Lake Jackson Texas 77566(US)

(74) Representative: Weickmann, Heinrich, Dipl.-Ing. et al, Patentanwälte Dipl.-Ing. H.Weickmann Dipl.-Phys.Dr. K.Fincke Dipl.-Ing. F.A.Weickmann Dipl.-Chem. B. Huber Dr.-Ing. H. Liska Dipl.-Phys.Dr. J. Prechtel Postfach 860820, D-8000 München 86(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 228 602 B1

## Description

The present invention provides a solid polymer electrolyte (SPE) structure that minimizes the electrical resistance between a current collector and an embedded or bonded electrode used in electrolytic SPE cells.

Solid polymer electrolyte (SPE) cells refer to cells in which one or both electrodes are bonded to or embedded in a polymeric ion exchange membrane. Such cells are rather well known in the art and are discussed in detail in the following U.S. Patent No. 4,315,805, Darlington, et al. (February 16, 1982); No. 4,364,815, Darlington, et al. (December 12, 1982); No. 4,272,353, Lawrence, et al.(June 9, 1981); and No. 4,394,229 Korach (July 19, 1983).

In SPE cells, a current collector is pressed against and contacts the electrode and provides a pathway for electrical current to flow from a power supply to the electrode. Current collectors are electrically conductive, hydraulically permeable matrices which may take a variety of shapes, sizes, and types, including metallic window screen, punched metallic plates, expanded metals, and the like. The following U.S. patents describe some commonly-used types of current collectors: No. 4,299,674, Korach (November 10, 1981); No. 4,468,311, de Nora, et al. (August 28, 1984); and No. 4,215,183, MacLeod (July 29, 1980).

SPE cells often have major problems due to the high electrical resistance between the embedded or bonded electrodes and the current collectors which are pressed against the electrode. Many workers in the art have attempted to solve the high resistance problem in a variety of ways. Some solutions include the use of a mattress as shown in U.S. Patent No. 4,468,311 issued to de Nora, et al. (August 28, 1984); or by applying the electro-catalyst directly to a conductive carbon cloth which acts as the current collector, as described in U.S. Patent No. 4, 239, 396 issued to Allen, et al. (October 6, 1981).

It is known from the prior art that suspended metal particles can be embedded in a polymer membrane to form the electrodes of a SPE cell. The U.S. Patent No. 3,134,697, Niedrach (May 26, 1964), discloses an electrode which is prepared by suspending metal particles in an incompletely polymerized ion exchange resin and completing the polymerization of the resin afterwards. The embedding of metal powder in a duroplastic fluorocarbon membrane by pressing the powder onto the surface of the membrane is only possible after dissolving the membrane partially by an expensive treatment with butyl ammonium hydroxide/butyl ammonium bromide and methanol for 48 hours according to DE-OS 3 036 066, Bergner (September 25, 1980).

In contrast to this, the invention uses the fluorocarbon membrane in its thermoplastic form and only in this form of the membrane the metal particles can be applied simply as a suspension.

More particularly, the invention resides in a method for forming a solid polymer electrolyte structure comprising a fluorocarbon membrane having catalytically active electroconductive particles embedded into at least one side of the membrane by plasticizing the membrane surface with a solvent and pressing the particles into the plasticized surface, which is characterized by the steps of:

a) forming a suspension of said electrically conductive particles and a liquid which is a solvent for the fluorocarbon membrane;

b) applying the suspension to at least one side of a fluorocarbon membrane sheet while said sheet is in its thermoplastic form;

c) removing substantially all of the liquid, leaving the particles on the membrane sheet;

d) pressing at least a portion of the particles into the membrane sheet,

and optionally, the side of the so-treated membrane having the particles on a surface thereof is contacted with an electrically conductive, hydraulically permeable matrix.

The FIGURE illustrates the SPE structure of the present invention and shows the membrane sheet 120, the plurality of electrically conductive particles 110, and the electrically conductive, hydraulically permeable matrix 130.

As a result of the intimate contact between the membrane sheet, the electrically conductive particles, and the electrically conductive, hydraulically permeable matrix (which serves as a current collector and is connected to a power supply), the resistance to the flow of electrical energy is minimized and, thus, the cell operates more efficiently than cells employing the SPE structures of the prior art.

The SPE structure of the present invention includes embodiments where electrically conductive particles are bonded to or embedded in one, or both, sides of the membrane sheet.

The FIGURE shows the SPE structure 100. It is composed of a membrane sheet 120 which has a plurality of electrically conductive particles embedded into it.

The particles are in physical and electrical contact with an electrically conductive, hydraulically permeable matrix 130, which is also embedded into the membrane sheet 120.

The membrane sheet divides the anode compartment from the cathode compartment and limits the type and amount of fluids and/or ions that pass between the anode compartment and the cathode compartments. The membrane may be a single layer membrane or a multilayer composite membrane.

The membrane may be constructed of a fluorocarbon-type material or of a hydrocarbon-type material. Such membrane materials are well known in the art. Preferably, however, fluorocarbon materials are generally employed because of their chemical stability.

Non-ionic (thermoplastic) forms of perfluorinated polymers described in the following U.S. Patents are suitable for use in the present invention: Nos. 3,282,875; 3,909,378; 4,025,405; 4,065,366; 4,116,888; 4,123,336; 4,126,588; 4,151,052; 4,176,215; 4,178,218; 4,192,725; 4,209,635; 4,212,713; 4,251,333; 4,270,996; 4,329,435; 4,330,654; 4,337,137; 4,337,211; 4,340,680; 4,357,218; 4,358,412; 4,358,545; 4,417,969;

4,462,877; 4,470,889; 4,478,695; and published European Patent Application 0,027,009. Such polymers usually have an equivalent weight in the range of from 500 to 2000.

To allow the electrically conductive particles to be embedded into the fluorocarbon membrane, it is desirable for the fluorocarbon membrane to be in its thermoplastic form. It is in a thermoplastic form when it is made and before it is converted into an ion exchange form. By thermoplastic form, it is meant, for instance, that the membrane has $SO_2X$ pendant groups rather than ionically bonded $SO_3Na$ or $SO_3H$ pendant groups, where X is $-F$, $-CO_2$, $-CH_3$, or a quaternary amine.

Particularly preferred fluorocarbon materials for use in forming membranes are copolymers of monomer I with monomer II (as defined below). Optionally, a third type of monomer may be copolymerized with I and II.

The first type of monomer is represented by the general formula:

$$CF_2 = CZZ' \qquad (I)$$

where:
Z and Z' are independently selected from $-H$, $-Cl$, $-F$, and $-CF_3$.

The second monomer consists of one or more monomers selected from compounds represented by the general formula:

$$Y-(CF_2)_a-(CFR_f)_b-(CFR_{f'})_c-O-[CF(CF_2X)-CF_2-O]_n-CF=CF_2 \qquad (II)$$

where:
Y is selected from $-SO_2Z$, $-CN$, $-COZ$, and $C(R_3f)(R_4f)OH$;
Z is selected from I, Br, Cl, F, OR, and $NR_1R_2$;
R is a branched or linear alkyl radical having from 1 to 10 carbon atoms or an aryl radical;
$R^3f$ and $R^4f$ are independently selected from perfluoroalkyl radicals having from 1 to 10 carbon atoms;
$R_1$ and $R_2$ are independently selected from H, a branched or linear alkyl radical having from 1 to 10 carbon atoms and an aryl radical;
a is 0–6';
b is 0–6;
c is 0 or 1;
provided a+b+c is not equal to 0;
X is selected from Cl, Br, F, and mixtures thereof when $n > 1$;
n is 0 to 6; and
$R_f$ and $R_{f'}$ are independently selected from F, Cl, perfluoroalkyl radicals having from 1 to 10 carbon atoms and fluorochloroalkyl radicals having from 1 to 10 carbon atoms.

Particularly preferred is a monomer where Y is $-SO_2F$ or $-COOCH_3$; n is 0 or 1; $R_f$ and $R_{f'}$ are F; X is Cl or F; and a+b+c is 2 or 3.

The third and optional monomer suitable is one or more monomers selected from the compounds represented by the general formula:

$$Y'-(CF_2)_{a'}-(CFR_f)_{b'}-(CFR_{f'})_{c'}-O-[CF(CF_2X')-CF_2-O]_{n'}-CF=CF_2 \qquad (III)$$

where:
Y' is selected from F, Cl and Br;
a' and b' are independently 0–3;
c' is 0 or 1;
provided a'+b'+c' is not equal to 0;
n' is 0–6;
$R_f$ and $R_{f'}$ are independently selected from Br, Cl, F, perfluoroalkyl radicals having from 1 to 10 carbon atoms, and chloroperfluoroalkyl radicals having from 1 to 10 carbon atoms; and
X' is selected from F, Cl, Br, and mixtures thereof when $n'>1$.

Conversion of Y to ion exchange groups is well known in the art and consists of a reaction of Y with an alkaline solution.

1,2-Dibromotetrafluoroethane and 1,2,2-trichlorotrifluoromethane have been discovered to be a good solvent for polymers prepared from the monomers described above.

While the fluorocarbon membrane is in its thermoplastic form, it is capable of softening when heated and hardening again when cooled. Thus, the particles can be easily pressed into the membrane when the membrane has been heated. The temperature to which the membrane is preferably heated to make it sufficiently soft to allow the particles to be embedded therein depends, to a great extent, on the chemical formulation of the membrane. In general, however, temperatures in the range of from 150°C to 350°C for membranes when Y= $-SO_2F$ (as defined in Equation II above).

Hydrocarbon-based membranes may (depending upon the exact composition of the hydrocarbon material) be heated to a temperature of from 100°C to 190°C.

For example, a membrane sheet may be prepared by hot pressing a sulfonyl fluoride powder having an equivalent weight of about 1000, as described in U.S. Patent No. 4,330,654 between two sheets of glass fiber reinforced polytetrafluoroethylene at a temperature of about 310°C under a pressure of about 0.75 tons per square inch (10,335 kPa) for about 1.25 minutes. The resulting sheet, having a diameter of from 15 to 18 cm has a thickness of from 0.0025 to 0.4 mm, preferably, from 0.01 to 0.25 mm thick and most preferably, from 0.05 to 0.15 mm.

In the present invention, it is important to make an effective bond between the electrically conductive, hydraulically permeable matrix and the membrane. Such a bond may be made with or without the use of externally-applied pressure during bonding. It has been discovered, however, that better bonding is generally obtained when the membrane and the electrically conductive, hydraulically permeable matrix are first contacted and heated at zero pressure for about 1 minute, followed by application of a pressure of from 1 to 8 tons per square inch (13,780 to 110,240 kPa) for from 0.2 to 2 minutes.

The present invention requires that at least one of the electrodes be in the form of a plurality of electrically conductive particles embedded into the membrane sheet. This is what makes a SPE electrode. The electrode composed of a plurality of electrically conductive particles can be either the cathode or the anode. Optionally, both electrodes can be electrically conductive particles embedded into opposite sides of the membrane sheet. For the purposes of the present discussion, the forms of both electrodes will be described as though they are electrically conductive particles and will also be described as if they are separate, conventional electrodes.

Conventional anodes are usually hydraulically permeable, electrically conductive structures made in a variety of shapes and styles including, for example, a sheet of expanded metal, perforated plate, punched plate, unflattened diamond shaped expanded metal, or woven metallic wire. Metals suitable for use as anodes include tantalum, tungsten, niobium, zirconium, molybdenum, and preferably, titanium, and alloys containing major amounts of these metals.

Optionally, the anode may be an SPE electrode consisting of a plurality of electrically conductive particles embedded into the membrane sheet. Materials suitable for use as electrocatalytically active anode materials include, for example, activating substances such as oxides of platinum group metals like ruthenium, iridium, rhodium, platinum, palladium, either alone or in combination with an oxide of a film-forming metal. Other suitable activating oxides include cobalt oxide either alone or in combination with other metal oxides. Examples of such activating oxides are found in U.S. Patent Nos. 3,632,498; 4,142,005; 4,061,549; and 4,214, 971.

Conventional cathodes are usually hydraulically permeable, electrically conductive structures made in a variety of shapes and styles including, for example, a sheet of expanded metal, perforated plate, punched plate, unflattened diamond shaped expanded metal, or woven metallic wire. Metals suitable for use as a cathode include, for example, copper, iron, nickel, lead, molybdenum, cobalt, and alloys containing a major proportion of these metals, such as low carbon stainless steel, and metals or alloys coated with substances such as silver, gold, platinum, ruthenium, palladium, and rhodium.

Optionally, as has been stated, the cathode may be an SPE electrode consisting of a plurality of electrically conductive particles embedded into the membrane sheet. Materials suitable for use as electrocatalytically active cathode materials include, for example, a platinum group metal or metal oxide, such as ruthenium or ruthenium oxide. U.S. Patent No. 4,465,580 describes such cathodes.

The electrically conductive particles, whether used as an anode or as a cathode are preferably finely divided and have a high surface area. For example, in the case of an oxygen or hydrogen electrode fuel cell, platinum black having a surface area (greater than 25 $m^2$/gram) or high surface area (800–1800 $m^2$/g) platinum on activated carbon powder (average particle size 10–30 µm) are quite suitable for use as the anode and the cathode. In the case of a chlorine cell, a coating may be prepared in which ruthenium dioxide particles are prepared by thermal decomposition of ruthenium nitrate for 2 hours at a temperature of 450°C. The resulting oxide may then be ground using a mortar and pestle and the portion which passes through a 325 mesh sieve (less than 44 µm) is used to prepare an electrode.

The electrically conductive, hydraulically permeable matrix, which is pressed against the side of the membrane having the embedded particles, acts as a current collector to transmit electrical energy to or from the SPE electrode, and may be composed of a variety of substances including carbon cloth, carbon paper, carbon felt, metallic screens, metallic felt, and porous metallic sheets. Preferably, however, the electrically conductive, hydraulically permeable matrix is a carbon cloth because carbon cloth is readily available, performs well, is easily handled, and is relatively inexpensive.

The cloth most preferably used in this invention is one having a low electrical resistivity, is relatively inexpensive, possesses sufficient strength for fabrication, and has adequate surface properties, such as roughness, to provide good bonding between the ion exchange membrane and itself. It is also preferable to provide good electrical contact between the carbon cloth and the electrocatalytically active particles of the electrode.

The type of carbon cloth suitable for use in the present invention is commercially available from a variety of sources including: Stackpole Fibers Co. sold under the trade names Panex PWB-3, PWB-6, KFB and SWB-8; from Union Carbide Corp. sold under the trade names WCA Graphite Cloth and VCK and VCA carbon cloth. Carbon cloth may also be woven from carbon fibers available from Fiberite Corp. sold under the trade names Celion 1000, Celion 3000, Celion 6000, Celion 12000, or from Celanese Corporation sold as C-6, or G-50. These materials may vary in physical properties but are acceptable for use in the present invention as long as they are sufficiently strong to maintain their physical integrity during manufacture. Fiber size and weave patterns may also vary and are not critical to the successful operation of the present invention. Cloth useful in the present invention preferably has a thickness of from 0.05 to 0.65 mm and an electrical resistivity of from 600,000 to 1375 microohm-centimeters. More preferably the cloth used in the present invention has a resistivity of approximately 1500 microohm-centimeters.

The SPE structure may then be fabricated by preparing the membrane in the thermoplastic form, and optionally, the current collector may then be bonded into the particles and embedding the electrocatalytically active particles into the membrane, the membrane converted to its ionic form by reacting it, in the case of $-SO_2F$ pendant groups, with NaOH under the following conditions: (1) immerse the film in about 25 weight percent sodium hydroxide for about 16 hours at a temperature of about 90°C (2) rinse the film twice in deionized water heated to a temperature of about 90°C using from 30 to 60 minutes per rinse. The pendant group is then in the $-SO_3^-Na^+$ form. Cations other than $Na^+$ can be made to replace the $Na^+$ if practical (such as $H^+$). Optionally, instead of bonding the current collector onto the particles, the current collector may be pressed against the particle after conversion of the membrane to its ionic form.

The electrocatalytically active particles may be incorporated into the surface of the membrane by making a suspension of the particles with a liquid and spraying or pouring the suspension over the membrane, removing the liquid, which is a solvent for the polymer, for example by allowing the liquid to evaporate, and then hot pressing at least a portion of the particles into the membrane with or without the carbon cloth in place. For example platinum and carbon particles may be slurried in a liquid such as 1,2-dibromotetrafluoroethane or 1,2,2-trichlorotrifluoroethane and poured or sprayed onto a membrane. The liquid is then allowed to evaporate. Carbon cloth current collectors can then be pressed against these so-formed electrodes.

The quantity of particles used on the membrane film to form the SPE electrode may vary depending upon the activity of the electrocatalyst, its cost, etc. For chlor-alkali SPE membranes, the amount of catalyst used is usually from 0.4 to 1.0 milligrams catalyst/square centimeter of membrane area. There is an upper limit on the amount of particles which may be placed onto the membrane to prevent the particles from penetrating the membrane. The upper limit has been determined to be about 25 milligrams catalyst/square centimeter of membrane area.

The solid polymer electrolyte structure of the present invention is useful in a wide variety of electrochemical cells including, for example, fuel cells for the continuous production of electrical energy; electrolysis cells for the production of chemical products; and batteries for the intermittent production of electrical energy.

## Claims

1. A method for forming a solid polymer electrolyte structure comprising a fluorocarbon membrane having catalytically active electroconductive particles embedded into at least one side of the membrane by plasticizing the membrane surface with a solvent and pressing the particles into the plasticized surface, which is characterized by the steps of:

a) forming a suspension of said electrically conductive particles and a liquid which is a solvent for the fluorocarbon membrane;

b) applying the suspension to at least one side of a fluorocarbon membrane sheet while said sheet is in its thermoplastic form;

c) removing substantially all of the liquid, leaving the particles on the membrane sheet;

d) pressing at least a portion of the particles into the membrane sheet.

2. The method of Claim 1, including the step of contacting the side of the so-treated membrane having the particles on the surface with an electrically conductive, hydraulically permeable matrix.

3. The method of Claim 2, including the step of subjecting the membrane/matrix combination to a pressure sufficient to embed at least a portion of the matrix into the membrane.

4. The method of Claim 3 wherein the matrix is selected from carbon cloth, carbon paper, carbon felt, metallic screen, metallic felt and a porous metallic sheet and has a resistivity of from 600,000 to 1375 microohm-centimeters.

5. The method of Claim 3 wherein the matrix is carbon cloth having a thickness of from 0.05 to 0.65 mm.

6. The method of Claim 3, 4 or 5 wherein the matrix has a resistivity of about 1500 microohm-centimeters.

7. The method of any one of the preceding claims wherein the membrane has a thickness of from 0.0025 to 0.4 mm and an equivalent weight of from 500 to 2000.

8. The method of any one of the preceding claims wherein the particles are applied to both sides of the membrane.

9. The method of any one of the preceding claims wherein the catalytically active particles are selected from platinum group metals, platinum group metal oxides, ruthenium, iridium, rhodium, platinum, palladium, either alone or in combination with an oxide of a film-forming metal, and cobalt oxide either alone or in combination with other metal oxides, said catalytically active particles having an average particle size diameter of from 10 to 30 µm and a surface area of from 800 to 1800 square meters per gram.

10. The method of Claim 8 or 9 wherein the catalytically active particles are present on the membrane at a level of from 0.4 to 25 milligrams per square centimeter of membrane area.

11. The method of Claim 1 wherein a plurality of electrically conductive particles form an anode electrode on one side of the membrane sheet and a plurality of electrically conductive particles form a cathode electrode on the opposite side of the membrane sheet.

12. The method of Claim 1 wherein one electrode is composed of a plurality of electrically conductive particles and the other electrode is composed of a porous metal plate.

13. The method of Claim 1 wherein the liquid is selected from 1,2-dibromotetrafluoroethane and 1,2,2-trichlorotrifluoroethane.

## Patentansprüche

1. Verfahren zur Herstellung einer Feststoffpolymerelektrolyt-Struktur, umfassend eine Fluorkohlenstoff-Membran mit katalytisch aktiven Strom leitenden Teilchen, eingebettet in mindestens eine Seite der Membran durch Plastizieren der Membranoberfläche mit einem Lösungsmittel und Pressen der Teilchen in die plastizierte Oberfläche, das gekennzeichnet ist durch die Schritte:

a) Bilden einer Suspension der elektrisch leitenden Teilchen und einer Flüssigkeit, die ein Lösungsmittel für die Fluorkohlenstoff-Membran ist;

b) Aufbringen der Suspension auf mindestens eine Seite eines Fluorkohlenstoff-Membran-Blattes, während das Blatt in seiner thermoplastischen Form vorliegt;

c) Entfernen im wesentlichen der gesamten Flüssigkeit, wobei die Teilchen auf dem Membranblatt verbleiben;

d) Pressen mindestens eines Teils der Teilchen in das Membranblatt.

2. Verfahren nach Anspruch 1, einschließend den Schritt des Kontaktierens der Seite der so behandelten Membran mit den Teilchen auf der Oberfläche mit einer elektrisch leitenden, hydraulisch permeablen Matrix.

3. Verfahren nach Anspruch 2, einschließlich dem Schritt des Unterwerfens der Membran/Matrix-Kombination einem ausreichenden Druck, um mindestens einen Teil der Matrix in die Membran einzubetten.

4. Verfahren nach Anspruch 3, worin die Matrix ausgewählt ist aus Kohlenstoffgewebe, Kohlenstoffpapier, Kohlenstoff-Filz, Metalldrahtsieb, Metallfilz und einem porösen Metallblatt und eine Widerstandsfähigkeit von 600 000 bis 1375 µOhm-cm hat.

5. Verfahren nach Anspruch 3, worin die Matrix ein Kohlenstoffgewebe mit einer Dicke von 0,05 bis 0,65 mm ist.

6. Verfahren nach Anspruch 3, 4 oder 5, worin die Matrix eine Widerstandsfähigkeit von ungefähr 1500 µOhm-cm hat.

7. Verfahren nach einem der vorhergehenden Ansprüche, worin die Membran eine Dicke von 0,0025 bis 0,4 mm und ein Äquivalentgewicht von 500 bis 2000 aufweist.

8. Verfahren nach einem der vorhergehenden Ansprüche, worin die Teilchen auf beide Seiten der Membran aufgebracht werden.

9. Verfahren nach einem der vorhergehenden Ansprüche, worin die katalytisch aktiven Teilchen ausgewählt sind aus Platingruppen-Metallen, Platingruppen-Metalloxiden, Ruthenium, Iridium, Rhodium, Platin, Palladium entweder alleine oder in Kombination mit einem Oxid eines filmbildenden Metalls, und Kobaltoxid entweder alleine oder in Kombination mit anderen Metalloxiden, wobei die katalytisch aktiven Teilchen einen durchschnittlichen Teilchengrößen-Durchmesser von 10 bis 30 µm und eine Oberfläche von 800 bis 1800 $m^2/g$ aufweisen.

10. Verfahren nach Anspruch 8 oder 9, worin die katalytisch aktiven Teilchen auf der Membran mit einer Menge von 0,4 bis 25 $mg/cm^2$ der Membranoberfläche vorhanden sind.

11. Verfahren nach Anspruch 1, worin eine Vielzahl von elektrisch leitenden Teilchen eine Anodenelektrode auf einer Seite des Membranblattes und eine Vielzahl von elektrisch leitenden Teilchen eine Kathodenelektrode auf der gegenüberliegenden Seite des Membranblattes bilden.

12. Verfahren nach Anspruch 1, worin eine Elektrode zusammengesetzt ist aus einer Vielzahl von elektrisch leitenden Teilchen und die andere Elektrode aus einem porösen Metallblech zusammengesetzt ist.

13. Verfahren nach Anspruch 1, worin die Flüssigkeit ausgewählt ist aus 1,2-Dibromtetrafluorethan und 1,2,2-Trichlortrifluorethan.

## Revendications

1. Procédé pour former une structure à polymère électrolyte solide comprenant une membrane fluorocarbonée présentant des particules conductrices d'électricité, catalytiquement actives, incorporées dans au moins un côté de la membrane par plastification de la surface de la membrane à l'aide d'un solvant et pressage des particules dans la surface plastifiée, caractérisé par les étapes consistant :

a) à former une suspension desdites particules conductrices d'électricité et d'un liquide qui est un solvant pour la membrane fluorocarbonée;

b) à appliquer la suspension sur au moins un côté de la feuille de membrane fluorocarbonée tandis que ladite feuille se présente sous sa forme thermoplastique;

c) à éliminer sensiblement tout le liquide, en laissant les particules sur la feuille de membrane;

d) à presser au moins une partie des particules dans la feuille de membrane.

2. Procédé de la revendication 1, comprenant l'étape de mise en contact du côté de la membrane ainsi traitée présentant les particules sur la surface avec une matrice hydrauliquement perméable, conductrice d'électricité.

3. Procédé de la revendication 2, comprenant l'étape de soumission de la combinaison membrane/matrice à une pression suffisante pour incorporer au moins une partie de la matrice dans la membrane.

4. Procédé de la revendication 3, dans lequel la matrice est choisie parmi du tissu au carbone, du papier carbone, du feutre au carbone, un écran métallique, un feutre métallique et une feuille métallique poreuse et présente une résistivité comprise entre 600 000 et 1 375 microohms-centimètres.

5. Procédé de la revendication 3, dans lequel la matrice est un tissu au carbone ayant une épaisseur comprise entre 0,05 et 0,65 mm.

6. Procédé de la revendication 3, 4 ou 5, dans lequel la matrice présente une résistivité d'environ 1 500 microohms-centimètres.

7. Procédé de l'une quelconque des revendications précédentes, dans lequel la membrane a une épaisseur comprise entre 0,0025 et 0,4 mm et un poids équivalent compris entre 500 et 2 000.

8. Procédé de l'une quelconque des revendications précédentes, dans lequel les particules sont appliquées sur les deux côtés de la membrane.

9. Procédé de l'une quelconque des revendications précédentes, dans lequel les particules catalytiquement actives sont choisies parmi des métaux du groupe du platine, des oxydes métalliques du groupe du platine, le ruthénium, l'iridium, le rhodium, le platine, le palladium, soit seuls, soit en combinaison avec un oxyde d'un métal formant un film, et oxyde de cobalt, soit seul, soit en combinaison avec d'autres oxydes métalliques, lesdites particules catalytiquement actives présentant un diamètre de grandeur de particule moyen compris entre 10 et 30 µm et une surface spécifique comprise entre 800 et 1 800 mètres carrés par gramme.

10. Procédé de la revendication 8 ou 9, dans lequel les particules catalytiquement actives sont présentes sur la membrane à un niveau compris entre 0,4 et 25 milligrammes par centimètre carré de superficie de membrane.

11. Procédé de la revendication 1, dans lequel une

pluralité de particules catalytiquement actives forment une électrode anode d'un côté de la feuille de membrane et une pluralité de particules catalytiquement actives forment une électrode cathode du côté opposé de la feuille de membrane.

12. Procédé de la revendication 1, dans lequel une électrode se compose d'une pluralité de particules catalytiquement actives et l'autre électrode se compose d'une plaque métallique poreuse.

13. Procédé de la revendication 1, dans lequel le liquide est choisi parmi le 1,2-dibromotétrafluoréthane et le 1,2,2-trichlorotrifluoréthane.

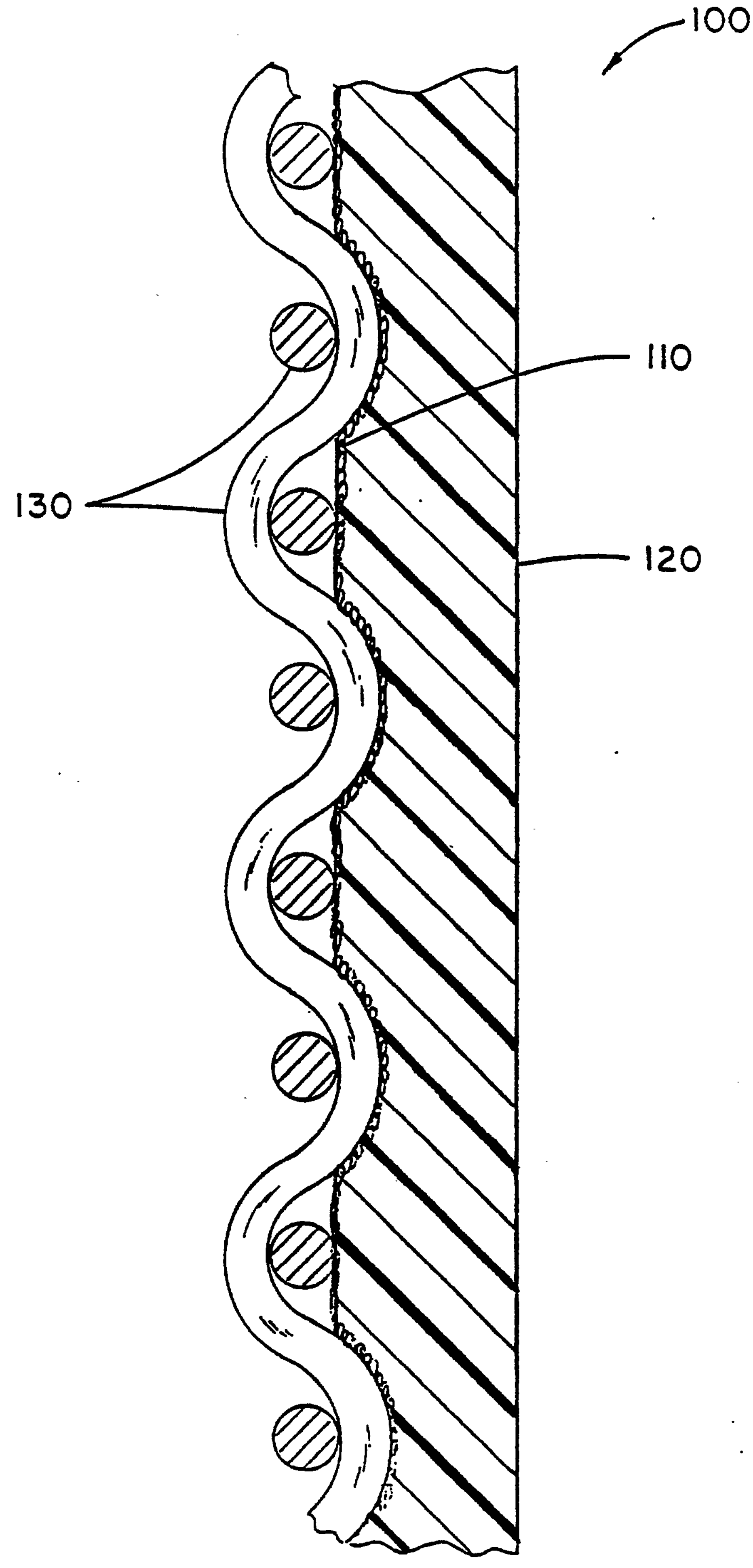
100
110
130
120